(19) **Europäisches Patentamt**

**European Patent Office**

**Office européen des brevets**

(11) **EP 0 376 096 B1**

(12) **EUROPÄISCHE PATENTSCHRIFT**

(45) Veröffentlichungstag und Bekanntmachung des Hinweises auf die Patenterteilung:
**28.06.2000 Patentblatt 2000/26**

(51) Int. Cl.⁷: **C08F 291/02**, C08F 2/22, C09D 151/00

(21) Anmeldenummer: **89123295.1**

(22) Anmeldetag: **15.12.1989**

(54) **Mehrphasige, wässrige Kunststoffdispersion und ihre Verwendung in Überzugsmitteln**

Aqueous dispersion of a multiphase plastic material and its use in coating compositions

Dispersion aqueuse de matières plastiques multiphases et leur utilisation comme revêtement

(84) Benannte Vertragsstaaten:
**AT BE CH DE ES FR GB IT LI NL SE**

(30) Priorität: **24.12.1988 DE 3843965**

(43) Veröffentlichungstag der Anmeldung:
**04.07.1990 Patentblatt 1990/27**

(73) Patentinhaber: **Röhm GmbH**
**64293 Darmstadt (DE)**

(72) Erfinder:
• **Klesse, Wolfgang, Dr.**
**D-6500 Mainz 31 (DE)**
• **Markert, Gerhard, Dr.**
**D-6105 Ober-Ramstadt (DE)**
• **Weber, Marliese**
**D-6074 Rödermark (DE)**

(56) Entgegenhaltungen:
**EP-A- 0 242 235**          **EP-A- 0 332 011**
**FR-A- 2 324 660**

• **PATENT ABSTRACTS OF JAPAN, Band 8, Nr. 283 (C-258)[1720], 25. Dezember 1984; & JP-A-59 154 133 (NIPPON GOSEI GOMU) 03-09-1984**
• **CHEMICAL ABSTRACTS, Band 102, Nr. 10, März 1985, Seite 10, Zusammenfassung Nr. 79450c, Columbus, Ohio, US; & JP-A-59 154 133 (JAPAN SYNTHETIC RUBBER) 03-09-1984**

**Beschreibung**

Die Erfindung betrifft wäßrige Überzugsmittel, die als Bindemittel dispergierte Latexteilchen mit einem harten Kernmaterial und einem verhältnismäßig weichen Schalenmaterial enthalten.

Stand der Technik

Es sind Latices bekannt, deren Latexteilchen aus einem Kernmaterial und einem den Kern einschließenden Schalenmaterial aufgebaut sind. Meistens enthalten sie einen weichen Kern und eine harte Schale, die es beispielsweise gestattet, das Polymerisat in Pulverform zu gewinnen.

F.L. Floyd hat in "IUPAC Macromolecular Symposium" Nr.28 (1982), S. 600 ff mehrschichtige Latices mit 35-50 % Polystyrol als Kernmaterial und 65-50 % eines Butylacrylat-Methylmethacrylat-Styrol-Mischpolymerisats als Schalenmaterial beschrieben und an den daraus hergestellten Filmen ein günstigeres Verhältnis von Härte und Biegsamkeit im Vergleich zu Filmen aus Copolymerisaten gleicher Bruttozusammensetzung oder aus entsprechenden Latexmischungen festgestellt. Die Teilchengröße liegt zwischen 170 und 370 nm.

Chemical Abstracts 102:79450 (Referat der JP-A 84,154,133) beschreibt aus einen vernetzten Kernpolymerisat und einen carboxylgruppenhaltigen Schalenpolymerisat aufgebaute Emulsionspolymerisate, die zur Verdickung alkalischer wäßriger Systeme geeignet sind. Infolge des hohen Gehalts an copolymerisierten Carbonsäuremononeren liegt die Glastemperatur des Schalenpolymerisats höher als die des Kernpolymerisats.

Die EP-A 332 011 älteren Rechts beschreibt wäßrige Überzugsmittel, die als Bindemittel ein Gemisch zweier wäßriger Dispersionen enthalten. Eine dieser Dispersionen ist in zwei Polymerisationsstufen hergestellt und zeichnet sich durch eine Mindestfilmbildungtemperatur von 65 - 110°C aus. In den Beispielen macht die erste Stufe 78 bzw. 66 Gew.-% aus. Die Polymerisate beider Stufen sind im wesentlichen aus Methyl- und Butylmethacrylat aufgebaut, wobei in der ersten Stufe Methylmethacrylat und in der zweiten Stufe Butylmethacrylat überwiegt. Die Teilchengröße kann 30 bis 150 nm betragen.

Aus EP-A 242 235 sind pulverförmige Bindemittelteilchen mit einem Kern/Schale-Aufbau bekannt. Dabei sind auch Ausführungsformen mit überwiegenden Kernanteil und einem Schalenmaterial mit verhältnismäßig niedriger Glasübergangstemperatur möglich. Aus einer zunächst hergestellten wäßrigen Dispersion werden durch Gefriertrocknung Bindemittelteilchen in Pulverform gewonnen. Diese werden in organischen Lösungsmitteln dispergiert und in dieser Form als Überzugsmittel eingesetzt.

Aufgabe und Lösung

Der Erfindung liegt die Aufgabe zugrunde, wäßrige Überzugsmittel zu schaffen, die trotz einer niedrigen Mindestfilmbildungstemperatur Filme bzw. Überzüge mit einem verhältnismäßig hohen Blockpunkt und von geringer Klebrigkeit und einer für technische Zwecke ausreichenden Härte ergeben. Ein Film wird in diesem Sinne als nicht klebrig bezeichnet, wenn er sich "trocken" anfühlt und beim Anfassen nicht an den Fingern haftet. Vor allem sollen Überzüge aus solchen Filmen bei Berührung nicht miteinander verkleben, was als "blocken" bezeichnet wird. Weiterhin soll der Film zwar eine hohe Bruchdehnung aufweisen, aber gleichzeitig hart sein und mechanischer Beanspruchung einen hohen Widerstand entgegensetzen. Die letztgenannten Eigenschaften werden durch einen hohen E-Modul wiedergegeben.

Bekanntlich läßt sich die Filmhärte eines Emulsionspolymerisats durch entsprechende Wahl der Monomerbestandteile in weiten Grenzen einstellen. Methylmethacrylat und Styrol sind die wichtigsten unter den Filmhärte erzeugenden Monomeren, während Ester der Acrylsäure und die höheren Ester der Methacrylsäure die Weichheit der Filme fördern. Durch richtige Wahl der Mengenanteile der beiden Monomerenarten läßt sich praktisch jede Zwischenstufe zwischen selbstklebenden und sprödharten Filmen verwirklichen. In der Praxis werden allerdings Forderungen an die Filmeigenschaften gestellt, die sich mit einer bestimmten Härteeinstellung nicht gleichzeitig verwirklichen lassen. Eine wichtige Forderung ist die nach einer niedrigen Mindestfilmbildungstemperatur; das Überzugsmittel soll bei möglichst niedriger Temperatur, vorzugsweise bei Raumtemperatur oder sogar noch deutlich darunter, z.B. bei Temperaturen bis herab zu 0 Grad C, zu geschlossenen Filmen auftrocknen. Der Blockpunkt, also die Temperatur, bei der Teile des gleichen Films aneinanderkleben, liegt im Regelfall nur wenig über der Mindestfilmbildungstemperatur. Das führt auch in Fällen, in denen die Filmflächen nicht miteinander in Berührung treten, zu nachteiligen Eigenschaften, wie Ankleben von Staub und Schmutz und zu mechanischer Empfindlichkeit schon bei Raumtemperatur oder nur wenig darüber, beispielsweise bei 30 Grad C.

Die gestellte Aufgabe liegt demnach im engeren Sinne darin, die Temperaturdifferenz zwischen der Mindestfilmbildungstemperatur und dem Blockpunkt zu vergrößern, beispielsweise auf 40 Grad, während sie bei den Filmen aus herkömmlichen Kunststoffdispersionen bei 10 bis 20 Grad zu liegen pflegt, unabhängig von der Lage der Mindestfilmbildungstemperatur. Gleichzeitig soll die Filmhärte im Vergleich zu Filmen aus herkömmlichen Dispersionen gleicher Mindestfilmbildungstemperatur erhöht werden.

Es wurde gefunden, daß diese Aufgabe durch ein wäßriges Überzugsmittel erfüllt wird, das als Bindemittel dispergierte Latexteilchen enthält mit einem mittleren Teilehendurchmesser unter 140 nm, aufgebaut aus

a) einem Kernmaterial mit einer dynamischen Glastemperatur über 60°C und
b) einem Schalenmaterial, das 0,5 bis 10 Gew.-% Einheiten einer ungesättigten polymerisierbaren Carbonsäure enthält, mit einer dynamischen Glastemperatur unter 80°C, wobei die dynamische Glastemperatur der Schale mindestens 20 K unterhalb der des Kerns liegt,
dadurch gekennzeichnet,
daß Kern- und Schalenmaterial zusammengenommen weniger als 20,2 Gew.-% Monomereinheiten aus Monovinylarylverbindungen enthalten und daß die wäßrige Dispersion der Latexteilchen eine Mindestfilmbildungstemperatur MFT unter 50°C hat und das Kernmaterial 5 - 45 Gew.-% und das Schalenmaterial 95 - 55 Gew.-% der Latexteilchen ausmachen.

Die mit der Erfindung erzielte Wirkung läßt sich unter der Annahme, daß die Latexteilchen aus einem kugelförmigen Kern und einer konzentrisch darum angeordneten kugeligen Schale aufgebaut sind, zwanglos deuten. Es wurde indessen nicht untersucht, ob alle erfindungsgemäßen Dispersionen tatsächlich so aufgebaut sind. Der Ausdruck "Kern-Schale-Prinzip" soll deshalb unabhängig von der nachweisbaren Morphologie alle Dispersionen umfassen, bei denen die als Kernmaterial und als Schalenmaterial bezeichneten Polymerisatkomponenten durch aufeinanderfolgende Stufen der Emulsionspolymerisation erzeugt worden sind.

Vorteile der Erfindung

Bei der Filmbildung entsteht aus der Kunststoffdispersion eine Matrix aus dem weicheren Schalenmaterial, in die die härteren Kerne der ursprünglichen Latexteilchen in unveränderter Form eingebettet sind. Der mittlere Abstand der eingebetteten Kernteilchen in der Matrix liegt - unter der Annahme gleichförmiger Teilchendurchmesser - etwa zwischen einem halben und einem vollen Kerndurchmesser. Diese Struktur der Matrix ist jedoch allein nicht ausreichend, um die gewünschten Eigenschaften zu verwirklichen. Erst bei Teilchendurchmessern der Latexteilchen unter 140 nm, besonders im Bereich von 120 bis 40 nm zeigt sich ein deutlicher Anstieg der Temperaturdifferenz zwischen der Mindestfilmbildungstemperatur (MFT) und dem Blockpunkt, wie die nachstehende Tabelle am Vergleich eines herkömmlichen Emulsionspolymerisats aus 49 Gew.-% Butylacrylat, 47,5 Gew.-% Methylmethacrylat und 3,5 Gew.-% Methacrylsäure mit erfindungsgemäßen Emulsionspolymerisaten gleicher Bruttozusammensetzung (abgesehen vom Vernetzergehalt) und unterschiedlicher Teilchendurchmesser, jedoch aufgebaut aus 25 Teilen eines Kernmaterials aus Polymethylmethacrylat und 3,6 Teilen Allylmethacrylat und 75 Teilen eines Schalenmaterials aus 65,3 Gew.-% Butylacrylat, 30 Gew.-% Methylmethacrylat und 4,7 Gew.-% Methacrylsäure, zeigt:

|  | Teilchendurchm. nm | MFT °C | Blockpunkt °C | Temp. Diff. Grad | E-Modul MPa |
|---|---|---|---|---|---|
| herkömmliches Emulsionspol. | 50 | 12 | 30 | 18 | 16 |
| Kern-Schale-Emulsionspol. | 275 | 0 | 24 | 24 | 1 |
|  | 155 | 0 | 30 | 30 | 2 |
|  | 90 | 0 | 35 | 35 | 10 |
|  | 55 | 0 | 40 | 40 | 16 |

Der Anstieg der Temperaturdifferenz auf Werte von 24 bis 40 Kelvin-Grad bedeutet eine spürbare Verbesserung der Filmeigenschaften. Es ist zwar nicht unerwartet, daß die Mindestfilmbildungstemperatur infolge des weicheren Schalenmaterials sinkt, jedoch war nicht vorherzusehen, daß gleichzeitig die Temperaturdifferenz zum Blockpunkt zunimmt und dieser bei Teilchendurchmessern unter 140 nm deutlich höher liegt als bei dem herkömmlichen Emulsionspolymerisat. Die niedrige Mindestfilmbildungstemperatur läßt die Verwendung der Kunststoffdispersion als Bindemittel in Beschichtungsmitteln bis zur Frostgrenze zu, während gleichzeitig die Temperatur, bei der die nachteiligen Folgen des Blockens und Verschmutzens des gebildeten Films zu befürchten sind, deutlich angehoben wird.

Auch die Härte der Filme wird überraschenderweise von der Teilchengröße der Latexteilchen stark beeinflußt. Sind die Teilchen zu groß, so sind die entstehenden Filme für viele Anwendungen zu weich. Wie aus obiger Tabelle ersichtlich, ist der E-Modul solcher Filme ziemlich niedrig. Erst wenn die Teilchengröße auf weniger als 140 nm, vorzugsweise unter 120 nm, insbesondere unter 100 nm vermindert wird, steigt der E-Modul deutlich an und erreicht oder übertrifft den E-Modul eines Emulsionspolymerisat-Films gleicher Bruttozusammensetzung. Bei dem betrachteten Beispiel macht der Anstieg mehr als eine Größenordnung aus. Im Vergleich zu einem einstufig erzeugten Emulsionspolymerisat mit einer Zusammensetzung, die dem Schalenmaterial eines erfindungsgemäßen Emulsionspolymerisats entspricht, ist der E-Modul eines Films aus der erfindungsgemäßen Kunststoffdispersion in typischen Fällen mindestens um den Faktor 10 größer und liegt mindestens bei 5 MPa. Wird dagegen die höchstzulässige Teilchengröße von 140 nm überschritten, so sinkt der E-Modul drastisch ab und erreicht kaum mehr als den doppelten Wert des entsprechenden einstufigen Emulsionspolymerisats.

Die Reißdehnung von Filmen aus erfindungsgemäßen Kunststoffdispersionen ist vergleichbar oder höher als diejenige von Filmen aus einstufig erzeugten Kunststoffdispersionen gleicher Bruttozusammensetzung.

Der wesentliche Vorteil der neuen wäßrigen Überzugsmittel liegt darin, daß sie Filme und Überzüge ergeben, die bei vergleichbarer Mindestfilmbildungstemperatur die Härte und den Blockpunkt von Filmen und Überzügen aus herkömmlichen Kunststoffdispersionen deutlich übertreffen.

Anwendung der neuen Überzugsmittel

Aufgrund ihrer niedrigen Filmbildungstemperaturen eignen sich die Überzugsmittel gemäß der Erfindung insbesondere für Anwendungen, bei denen eine Filmbildung bei Temperaturen ab der Frostgrenze bis zum Bereich der Raumtemperatur oder bei leicht erhöhten Temperaturen, etwa bis zu 50 Grad C, vorzugsweise jedoch darunter, erwünscht ist.

Typische Einsatzgebiete sind deshalb wäßrige Überzugsmittel, bei deren Anwendung sich der aus der Kunststoffdispersion gebildete Film mit dem Substrat haftend verbindet, vor allem Anstrichfarben für Innen- und Außenanwendungen im Bauwesen. Ebenso sind industrielle Überzugsmittel zu nennen, insbesondere soweit bei ihrer Anwendung erhöhte Temperaturen nicht oder schwer zu verwirklichen sind. Beispiele solcher Überzüge sind Schlußlacke, Haftgrundierungen, Isolierungen und heißsiegelbare Klebschichten. Weiterhin sind die erfindungsgemäßen Dispersionen zum Verfestigen von flächigen Fasergebilden geeignet. Während für die zuletzt genannten Anwendungen Filme der reinen Kunststoffdispersionen brauchbar sind, werden sie für den Beschichtungs- und Anstrichsektor in der Regel pigmentiert oder auf andere Weise mit Füllstoffen versetzt. Hier können gängige Rezepturen und Formulierungen angewendet werden, wobei stets der Vorteil eines hohen Blockpunktes bei hoher Filmelastizität und geringer Klebrigkeit und Verschmutzungsneigung erhalten bleibt. Es sind allerdings auch Fälle vorstellbar, für die der Film von dem Substrat, auf dem er erzeugt worden ist, abgenommen und als selbsttragende Folie in anderen Bereichen der Technik angewendet wird.

Die Herstellung der Kunststoffdispersionen

erfolgt durch wenigstens zweistufige radikalische Emulsionpolymerisation in wäßriger Phase, wobei in der ersten Stufe das Kernmaterial und in der zweiten bzw. letzten Stufe das Schalenmaterial erzeugt wird.

In der ersten Stute werden die Teilchen gebildet, die in der zweiten Stufe auf ihre endgültige Größe weiterwachsen. Nach Abschluß der ersten Stufe werden in der Regel keine oder wenig neue Teilchen gebildet.

Der mittlere Teilchendurchmesser wird in an sich bekannter Weise durch die Anzahl der entstehenden Latexteilchen gesteuert. In der Regel werden bereits zu Beginn der ersten Stufe alle Teilchen gebildet. Die Konzentration des Emulgiermittels in der Anfangsphase der Emulsionspolymerisation hat daher entscheidenden Einfluß auf die Teilchenzahl und damit auf die Teilchengröße. Sobald die ursprünglich gebildeten Latexteilchen zu wachsen beginnen, adsorbieren sie den verfügbaren Emulgator an ihrer schnell wachsenden Oberfläche, so daß keine neuen Wachstumskeime mehr gebildet werden. Üblicherweise gibt man im Laufe der Emulsionspolymerisation weiteres Emulgiermittel hinzu, um die neu entstehende Polymerisatoberfläche ausreichend mit Emulgiermittel abzudecken. Dabei sollte aber ein Anstieg der freien Emulgiermittelkonzentration über die kritische Mizellbildungskonzentration zu jedem Zeitpunkt nach der Teilchenbildungsphase möglichst vermieden werden. Das verfügbare Monomer bzw. Monomerengemisch wird dann ausschließlich für das Wachstum der ursprünglichen Keime verbraucht.

Das Verhältnis der Wasserphase zur Gesamtmenge der in beiden Stufen verwendeten Monomeren wird entsprechend dem gewünschten Feststoffgehalt der herzustellenden Kunststoffdispersion gewählt; er liegt meistens zwischen 30 und 60 Gew.-%. Das Monomer bzw. Monomerengemisch für die erste Stufe kann insgesamt im Polymerisationsgefäß in Form einer wäßrigen Emulsion vorgelegt oder teilweise oder ganz im Laufe der ersten Stufe zudosiert werden. Nach dessen Polymerisation wird das Monomer oder das Monomerengemisch für die zweite Stufe auf einmal oder allmählich zugesetzt und ebenfalls polymerisiert. Die Polymerisation wird in beiden Stufen durch übliche radikalische Initiatoren, wie Alkali- oder Ammoniumperoxodisulfat, Azo-bis-isobutyronitril, 4,4'-Azo-biscyanvaleriansäure, tert.-Butylperpivalat oder tert.-Butylhydroperoxid ausgelöst. Zur Bildung eines Redox-Systems können zusammen mit den peroxidischen Initiatoren reduzierende Verbindungen eingesetzt werden, beispielsweise Natriumpyrosulfit, Natriumhydroxymethylsulfinat oder Ascorbinsäure, gegebenenfalls in Kombination mit Schwermetallsalzen, wie Eisen-II-Sulfat. Die Polymerisationstemperatur liegt in der Regel zwischen 20 und 90 Grad C und wird durch Kühlung des Ansatzes aufrechterhalten.

Als Emulgiermittel eignen sich die üblichen wasserlöslichen Emulgatoren vom anionischen, kationischen oder nichtionischen Typ. Da die Kunststoffdispersion sehr kleine Teilchen enthalten, muß in der Anfangsphase eine große Zahl von Keimen gebildet und eine entsprechend hohe Emulgatorkonzentration eingestellt werden. Die geeignete Emulgiermittelmenge wird für das jeweilige Polymerisationssystem durch Vorversuche ermittelt, indem man von einer üblichen Emulgatormenge, beispielsweise 1 Gew.-%, bezogen auf die Wasserphase, ausgeht und, falls die entstehenden Teilchen zu groß oder zu klein sind, die Emulgiermittelmenge beim nächsten Vorversuch vergrößert oder verkleinert. Im übrigen sind dem Fachmann Maßnahmen zur Beeinflussung der Teilchengröße bekannt; vgl. Sütterlin, Kurth, Markert in "Makromolekulare Chemie", 177 (1976), S.1549-1565.

Unter dem Ausdruck "Teilchengröße" wird hier der Gewichtsmittelwert des Teilchendurchmessers verstanden. Er kann nach bekannten Methoden, beispielsweise durch Trübungs- oder Streulichtmessungen, ermittelt werden. Besonders geeignet ist die Methode der Photonen-Korrelations-Spektroskopie. Die Teilchengröße soll unter 140 nm, vorzugsweise unter 120 nm und insbesondere unter 100 nm liegen. Im Bereich von 50 bis 100 nm wurden die vorteilhaftesten Ergebnisse erzielt. Die Teilchengrößenverteilung ist vorzugsweise eng; die Uneinheitlichkeit U der Teilchengröße soll unter 5, bevorzugt unter 2 liegen; sie ergibt sich aus dem Gewichts- und den Zahlenmittelwert der Teilchengröße, $d_W$ bzw $d_N$, nach der Formel $U = d_W{}^3 / d_N{}^3 - 1$ .

### Der Aufbau des Kern- und des Schalenmaterials

Das Kernmaterial, das in der ersten Polymerisationsstufe gebildet wird, ist durch eine dynamische Glastemperaturur über 60 Grad C, vorzugsweise 90 bis 180 Grad C, gekennzeichnet. Die dynamische Glastemperatur wird auch als $T_{g(dyn)}$- bzw. als T-lamba-max-Wert bezeichnet und kann an einem Film des Polymerisats im Torsionsschwingungsversuch nach DIN 53 445 gemessen werden. Am Aufbau des Kernmaterials sind überwiegend hartmachende Monomere beteiligt; darunter werden Monomere verstanden, deren Homopolymere eine dynamische Glastemperatur von mindestens 60 Grad C haben, z.B. Styrol, alpha-Methylstyrol, Acryl-und Methacrylnitril, Methyl-, Äthyl-, Isopropyl-, sec. Butyl-, Cyclohexylmethacrylat, Vinylchlorid, Vinylidenchlorid oder Äthylen. Vernetzende Comonomere mit zwei oder mehr (2-6) polymerisierbaren Kohlenstoff-Doppelbindungen im Molekül, wie Vinyl- oder Allylacrylat oder -Methacrylat, Dioldiacrylate und -methacrylate, Methylen-bis-acrylamid oder -methacrylamid, können in üblichen geringen Mengen, z.B. 0,01 bis 5 Gew.-%, mitverwendet werden, jedoch haben derartige Zusätze meistens keinen erheblichen Einfluß auf die hier diskutierten Produkteigenschaften, wie Mindestfilmbildungstemperatur, Filmhärte oder -klebrigkeit oder den Blockpunkt. Ihr Anteil kann daher ohne Nachteil für das Endprodukt auf 20 Gew.-% oder mehr gesteigert werden.

Als weitere Comonomere können, wenn erwünscht, beispielsweise Acryl- und/oder Methacrylamid, deren N-Alkylderivate, Methylolverbindungen und Methyloläther, Hydroxyalkylester der Acryl- und/oder Methacrylsäure, sowie äthylenisch ungesättigte, radikalisch polymerisierbares Carbonsäuren, wie Acryl-, Methacryl-, Malein-, Fumar- oder Itakonsäure in Mengen bis zu 20 Gew.-% des Gesamtgewichts der Monomeren der ersten Stufe, mitverwendet werden.

Das Kernmaterial macht 5 bis 45 Gew.-% des gesamten Emulsionspolymerisats aus und somit auch einen gleichgroßen Anteil an dem insgesamt verarbeiteten Monomerengemisch. Vorzugsweise liegt der Anteil des Kernmaterials bei 10 - 40 %.

Das Schalenmaterial macht dementsprechend 95 bis 55, bevorzugt 90 bis 60 Gew.-% des Emusionspolymerisats bzw. des Monomerengemisches aus. Für das Schalenmaterial ist eine dynamische Glastemperatur unter 80 Grad C, vorzugsweise unter 60 Grad C, insbesondere von 0 bis 35 Grad C, charakteristisch. Sie liegt mindestens 20, bevorzugt mehr als 50, in vielen Fällen mehr als 100 Kelvin-Grade unter der des Kernmaterials. Das Schalenmaterial wird zu einem wesentlichen Teil aus weichmachenden Monomeren gebildet, d.h. solchen, deren Homopolymere dynamische Glastemperaturen unter 60°C haben. Wichtigste Beispiele solcher Monomerer sind die Alkylester der Acrylsäure, vor allem die $C_1$- bis $C_8$-Alkylester. Geeignet sind auch die höheren Alkylester (mit 4 bis 20 C-Atomen) der Methacrylsäure, Vinyl-alkyläther, Vinylacetat, Vinylversatat und Olefine. Solange das Schalenmaterial insgesamt eine Glastemperatur im beanspruchten Bereich hat, können an seinem Aufbau auch hartmachende Monomere beteiligt sein.

Das gilt im entsprechender Weise auch für einen möglichen Anteil weichmachender Monomerer an dem Kernmaterial. In der zweiten Stufe sind 0,5 bis 10 Gew.-%, vorzugsweise 0,5 bis 5 Gew.-% Einheiten einer ungesättigten, polymerisierbaren Carbonsäuren, wie Acryl-, Methacryl-, Itakon-, Malein- oder Fumarsäure beteiligt.

Die Kunststoffdispersionen sind vorzugsweise sowohl im Kernmaterial als auch im Schalenmaterial überwiegend, insbesondere zu 70 bis 100 Gew.-%, aus Alkylestern der Acryl- und Methacrylsäure, Acryl- oder Methacrylnitril, Styrol oder alpha-Methylstyrol aufgebaut.

Selbstvernetzende Typen dieser Dispersionen können im Schalenmaterial etwa 1 bis 10 Gew.-% an Methylolacrylamid, -methacrylamid oder deren Alkyläthern, gegebenenfalls zusammen mit Acryl- oder Methacrylamid enthalten.

Das Gew.-Mittel des Molekulargewichts des Kernpolymerisats liegt, sofern es unvernetzt ist, über 10 000, vorzugsweise zwischen 100 000 und 2 Millionen, das des Schalenpolymerisats über 10 000, vorzugsweise über 100 000, insbesondere über 300 000.

Falls erwünscht, können der Dispersion vernetzend wirkende Substanzen zugesetzt werden. Solche Zusätze, es handelt sich beispielsweise um oligomere Aziridine oder Epoxide mit mindestens zwei funktionellen Gruppen pro Molekül, um Harnstoff- oder Melaminharzvorkondensate oder um vernetzende Metallionen, wie z.B. $Zn^{2+}$-Salze, sind dem Fachmann bekannt, ebenso die jeweils entsprechenden koreaktiven Gruppen im Emulsionspolymerisat, wie z.B. Carboxyl-, Hydroxyl-, Amid- oder Methylolamidgruppen. Der Anteil solcher Zusätze liegt in der Regel unter 10 % bezogen auf den Feststoff der Dispersion, meistens beträgt er 0 - 5 %.

BEISPIELE

In den nachfolgenden Beispielen wird als Emulgator stets das Natriumsalz des sulfatierten Additionsproduktes von 7 Mol Äthylenoxid an 1 Mol Tri-isobutyl-phenol und als Initiator Ammoniumperoxodisulfat verwendet. Das Gewichtsverhältnis von Kernmaterial zu Schalenmaterial beträgt jeweils 25 : 75, mit Ausnahme der Beispiele 5 und 9, wo es 40 : 60 bzw. 20 : 80 beträgt.

Die Emulsionspolymerisation wurde in allen Fällen in einem Witt'schen Topf mit 2 Liter Fassungsvermögen mit Rührer und äußerem Heiz- oder Kühlbad durchgeführt. Bei jedem Ansatz wurde eine wäßrige Lösung des Emulgators vorgelegt und auf 80 Grad C erhitzt. Dann wurden 0,54 g Ammoniumperoxodisulfat zugesetzt und, soweit nicht anders angegeben, innerhalb einer Stunde die Emulsion I und anschließend innerhalb von drei Stunden die Emulsion II zugetropft. Dabei wurde die Temperatur des Ansatzes im Bereich von 80 bis 100 Grad C gehalten. Nach dem Abkühlen auf Raumtemperatur wurde mit wäßrigem Ammoniak auf pH 9 eingestellt.

Beispiel 1

| Vorlage | 638,0 | g Wasser |
|---|---|---|
| | 16,2 | g Emulgator |
| Emulsion I | 110 | g Wasser |
| | 0,4 | g Emulgator |
| | 173,5 | g Methacrylsäuremethylester |
| | 6,5 | g Allylmethacrylat |
| Emulsion II | 329 | g Wasser |
| | 1,22 | g Emulgator |
| | 1,62 | g Initiator |
| | 352,6 | g Butylacrylat |
| | 162 | g Methylmethacrylat |
| | 25,4 | g Methacrylsäure |

Feststoffgehalt der erhaltenen Dispersion: 39 Gew.-%
Viskosität: 110 mPa s
Teilchengröße: 90 nm
Dynamische Glastemperatur: Kern 130-135 Grad C, Schale 15 Grad C

Beispiel 2

| Vorlage | 746 | g Wasser |
|---|---|---|
| | 32,4 | g Emulgator |
| Emulsion I | 132 | g Wasser |
| | 0,4 | g Emulgator |
| | 130,1 | g Methacrylsäuremethylester |
| | 4,9 | g Allylmethacrylat |
| Emulsion II | 395 | g Wasser |
| | 1,22 | g Emulgator |
| | 1,62 | g Initiator |
| | 264,5 | g Butylacrylat |
| | 121,5 | g Methylmethacrylat |
| | 19,0 | g Methacrylsäure |

Feststoffgehalt der erhaltenen Dispersion: 29 Gew.-%
Viskosität: 11 mPa s
Teilchengröße: 55 nm
Dynamische Glastemperatur: Kern 130-135 Grad C, Schale 15 Grad C.

Beispiel 3

Vorlage und Emulsion II wie in Beispiel 1

| Emulsion I | 110 | g Wasser |
|---|---|---|
| | 0,4 | g Emulgator |
| | 180,0 | g Methacrylsäuremethylester |

Feststoffgehalt der erhaltenen Dispersion: 39 Gew.-%
Viskosität: 850 mPa s
Teilchengröße: 80 nm
Dynamische Glastemperatur: Kern 130-135 Grad C, Schale 15 Grad C.

Beispiel 4

Vorlage und Emulsion II wie in Beispiel 1

| Emulsion I | 110 | g Wasser |
|---|---|---|
| | 0,4 | g Emulgator |
| | 179,1 | g Methacrylsäuremethylester |
| | 0,9 | g Glykoldimethacrylat |

Feststoffgehalt der erhaltenen Dispersion: 39 Gew.-%
Viskosität: 1575 mPa s
Teilchengröße: 75 nm
Dynamische Glastemperatur: Kern 130-135 Grad C, Schale 15 Grad C.

Beispiel 5

| Vorlage | 638 | g Wasser |
|---|---|---|
| | 16,2 | g Emulgator |
| Emulsion I | 162 | g Wasser |
| | 0,65 | g Emulgator |
| | 277,6 | g Methacrylsäuremethylester |
| | 10,4 | g Allylmethacrylat |
| Zulaufdauer 96 Minuten | | |
| Emulsion II | 267 | g Wasser |
| | 0,97 | g Emulgator |
| | 1,62 | g Initiator |
| | 282,1 | g Butylacrylat |
| | 129,6 | g Methylmethacrylat |
| | 20,3 | g Methacrylsäure |
| Zulaufdauer 144 Minuten | | |

Feststoffgehalt der erhaltenen Dispersion: 39 Gew.-%
Viskosität: 32 mPa s
Teilchengröße: 100 nm
Dynamische Glastemperatur: Kern 130-135 Grad C, Schale 15 Grad C.

Beispiel 6

Vorlage und Emulsion I wie in Beispiel 1

| Emulsion II | 329 | g Wasser |
|---|---|---|
| | 1,22 | g Emulgator |
| | 1,62 | g Initiator |
| | 309,4 | g Butylacrylat |
| | 205,2 | g Methylmethacrylat |
| | 25,4 | g Methacrylsäure |

Feststoffgehalt der erhaltenen Dispersion: 40 Gew.-%
Viskosität: 80 000 mPa s
Teilchengröße: 55 nm
Dynamische Glastemperatur: Kern 130-135 Grad C, Schale 21 Grad C

Beispiel 7

Vorlage und Emulsion I wie in Beispiel 1

| Emulsion II | 329 | g Wasser |
|---|---|---|
| | 1,22 | g Emulgator |
| | 1,62 | g Initiator |
| | 271,6 | g Butylacrylat |
| | 243,0 | g Methylmethacrylat |
| | 25,4 | g Methacrylsäure |
| | 1,62 | g 2-Äthylhexyl-thioglykolat |

Feststoffgehalt der erhaltenen Dispersion: 39 Gew.-%
Viskosität: 4 400 mPa s
Teilchengröße: 65 nm
Dynamische Glastemperatur: Kern 130-135 Grad C, Schale 32 Grad C.

Vergleichsbeispiel 1

| Vorlage | 638 | g Wasser |
|---|---|---|
| | 16,2 | g Emulgator |
| Emulsion | 444 | g Wasser |
| | 1,62 | g Emulgator |
| | 1,62 | g Initiator |
| | 352,8 | g Butylmethacrylat |
| | 342 | g Methylmethacrylat |
| | 25,2 | g Methacrylsäure |
| Zulaufdauer 4 Stunden. Nach Abkühlung wird mit wäßrigem Ammoniak auf pH 9 eingestellt. | | |

Feststoffgehalt der erhaltenen Dispersion: 40 Gew.-%
Viskosität: 36 000 mPa s
Teilchengröße: 50 nm
Dynamische Glastemperatur: 33 Grad C.

Vergleichsbeispiel 2

| Vorlage | 638 | g Wasser |
|---|---|---|
| | 0,16 | g Initiator |
| | 0,27 | g Emulgator |
| Emulsion I | 110 | g Wasser |
| | 4,0 | g Emulgator |
| | 173,5 | g Methacrylsäuremethylester |
| | 6,5 | g Allylmethacrylat |
| Emulsion II | 329 | g Wasser |
| | 12,2 | g Emulgator |
| | 1,62 | g Initiator |
| | 352,6 | g Butylacrylat |
| | 162 | g Methylmethacrylat |
| | 25,4 | g Methacrylsäure |

Feststoffgehalt der erhaltenen Dispersion: 39 Gew.-%

Viskosität: 205 mPa s

Teilchengroße: 155 nm

Dynamische Glastemperatur: Kern 130-135 Grad C, Schale 15 Grad C.

Vergleichsbeispiel 3

| Vorlage | 638 | g Wasser |
|---|---|---|
| | 0,05 | g Emulgator |
| Emulsion I | 110 | g Wasser |
| | 4,0 | g Emulgator |
| | 173,5 | g Methacrylsäuremethylester |
| | 6,5 | g Allylmethacrylat |
| Emulsion II | 329 | g Wasser |
| | 12,2 | g Emulgator |
| | 1,62 | g Initiator |
| | 352,6 | g Butylacrylat |
| | 162 | g Methylmethacrylat |
| | 25,4 | g Methacrylsäure |

Feststoffgehalt der erhaltenen Dispersion: 39 Gew.-%

Viskosität: 19 mPa s

Teilchengröße: 275 nm

Dynamische Glastemperatur: Kern 130-135 Grad C, Schale 15 Grad C

Vergleichsbeispiel 4

Vorlage und Emulsion II wie im Vergleichsbeispiel 2

| Emulsion I | 110 | g Wasser |
|---|---|---|
| | 4,0 | g Emulgator |
| | 180,0 | g Methacrylsäuremethylester |

Feststoffgehalt der erhaltenen Dispersion: 38 Gew.-%

Viskosität: 875 mPa s

Teilchengröße: 160 nm

Dynamische Glastemperatur: Kern 130-135 Grad C, Schale 15 Grad C.

Vergleichsbeispiel 5

Vorlage und Emulsion II wie im Vergleichsbeispiel 3

| Emulsion I | 110 | g Wasser |
|---|---|---|
| | 4,0 | g Emulgator |
| | 180,0 | g Methacrylsäuremethylester |

Feststoffgehalt der erhaltenen Dispersion: 39 Gew.-%
Viskosität: 60 mPa s
Teilchengröße: 225 nm
Dynamische Glastemperatur: Kern 130-135 Grad C, Schale 15 Grad C.

Vergleichsbeispiel 6

Vorlage und Emulsion I wie im Vergleichsbeispiel 2

| Emulsion II | 329 | g Wasser |
|---|---|---|
| | 12,2 | g Emulgator |
| | 1,62 | g Initiator |
| | 309,4 | g Butylacrylat |
| | 205,2 | g Methylmethacrylat |
| | 25,4 | g Methacrylsäure |

Feststoffgehalt der erhaltenen Dispersion: 39 Gew.-%
Viskosität: 480 mPa s
Teilchengröße: 170 nm
Dynamische Glastemperatur: Kern 130-135 Grad C, Schale 21 Grad C.

Vergleichsbeispiel 7

Vorlage und Emulsion I wie im Vergleichsbeispiel 3

| Emulsion II | 329 | g Wasser |
|---|---|---|
| | 12,2 | g Emulgator |
| | 1,62 | g Initiator |
| | 309,4 | g Butylacrylat |
| | 205,2 | g Methylmethacrylat |
| | 25,4 | g Methacrylsäure |

Feststoffgehalt der erhaltenen Dispersion: 39 Gew.-%
Viskosität: 22 mPa s
Teilchengröße: 280 nm
Dynamische Glastemperatur: Kern 130-135 Grad C, Schale 21 Grad C.

Vergleichsbeispiel 8

| Vorlage | 638 | g Wasser |
|---|---|---|
| | 16,2 | g Emulgator |
| Emulsion | 706 | g Wasser |
| | 1,62 | g Emulgator |
| | 1,62 | g Initiator |
| | 412,6 | g Butylmethacrylat |
| | 273,6 | g Methylmethacrylat |
| | 33,8 | g Methacrylsäure |
| Zulaufdauer 4 Stunden. Nach Abkühlung wird mit wäßrigem Ammoniak auf pH 9 eingestellt. | | |

Feststoffgehalt der erhaltenen Dispersion: 35 Gew.-%
Viskosität: 46 000 mPa s
Teilchengröße: 50 nm
Dynamische Glastemperatur: 21 Grad C.

Eigenschaften der Emulsionspolymerisate bzw. Filme nach den Beispielen 1 bis 7 und Vergleichbeispielen 1 bis 8

Bestimmung des Blockpunktes: Die Dispersion wird mit einem Rakel bei einer Spalthöhe von 0,2 mm auf ein schwach saugendes Papier aufgezogen und 3 Std. bei 60 Grad C getrocknet. Ein Streifen des beschichteten Papiers von 25 x 170 mm wird in der Mitte der Breite nach mit der beschichteten Seite nach innen gefalten und zwischen zwei ebenen Flächen bei schrittweise um jeweils 5 K steigenden Temperaturen unter einer Belastung von 50 p/cm² gelagert. Der Blockpunkt ist die niedrigste Temperatur, bei der die Oberfläche des Beschichtungsfilms nach erfolgter

| Beispiel Nr. | Zusammensetzung ** (Gew.-%) | | | | | Teilchen-größe (nm) | MFT (°C) | Block-Punkt (°C) | Block-punkt - MFT (°C) | E-Modul (MPa) | Reiß-dehnung (%) |
|---|---|---|---|---|---|---|---|---|---|---|---|
| | MMA | ALM | BA | MMA | MAS | | | | | | |
| 1 | 96,4 | 3,6 | 65,3 | 30 | 4,7 | 90 | 0 | 35 | 35 | 16 | 275 |
| 2 | 96,4 | 3,6 | 65,3 | 30 | 4,7 | 55 | 0 | 40 | 40 | 16 | 261 |
| 3 | 100 | - | 65,3 | 30 | 4,7 | 80 | 0 | 40 | 40 | 30 | 396 |
| 4 | 99,5 | 0,5* | 65,3 | 30 | 4,7 | 75 | 0 | 40 | 40 | 27 | 419 |
| 5 | 96,4 | 3,6 | 65,3 | 30 | 4,7 | 100 | 25 | 50 | 25 | 104 | 32 |
| 6 | 96,4 | 3,6 | 57,3 | 38 | 4,7 | 55 | 12 | 55 | 43 | 45 | 221 |
| 7 | 96,4 | 3,6 | 50,3 | 45 | 4,7 | 65 | 21 | 45 | 24 | 123 | 68 |

Vergleichsbeispiele Nr.

| | MMA | ALM | BA | MMA | MAS | Teilchen-größe (nm) | MFT (°C) | Block-Punkt (°C) | Block-punkt - MFT (°C) | E-Modul (MPa) | Reiß-dehnung (%) |
|---|---|---|---|---|---|---|---|---|---|---|---|
| 1 | - | - | 49,0 | 47,5 | 3,5 | 50 | 12 | 30 | 18 | 16 | 357 |
| 2 | 96,4 | 3,6 | 65,3 | 30 | 4,7 | 155 | 0 | 30 | 30 | 2 | 1022 |
| 3 | 96,4 | 3,6 | 65,3 | 30 | 4,7 | 275 | 0 | 24 | 24 | 1 | 1618 |
| 4 | 100- | - | 65,3 | 30 | 4,7 | 160 | 0 | <24 | <24 | 1 | 588 |
| 5 | 100 | - | 65,3 | 30 | 4,7 | 225 | 0 | <24 | <24 | 1 | 929 |
| 6 | 96,4 | 3,6 | 57,3 | 38 | 4,7 | 170 | 5 | 45 | 40 | 4 | 244 |
| 7 | 96,4 | 3,6 | 57,3 | 38 | 4,7 | 280 | 4 | 40 | 36 | 3 | 326 |
| 8 | - | - | 57,3 | 38 | 4,7 | 50 | 0 | <24 | <24 | 2 | 687 |

Anmerkungen:

* Äthylenglykol-dimethacrylat

** Kernmaterial/Schalenmaterial

MMA = Methylmethacrylat, ALM = Allymethacrylat

BA = Butylacrylat, MAS = Methacrylsäure

MFT = Mindestfilmbildungstemperatur

14

Belastung beim Auseinanderziehen des gefalteten Streifens erkennbar beschädigt wird.

Beispiel 8

Vorlage wie in Beispiel 1.

| Emulsion I | 118 | g Wasser |
|---|---|---|
| | 0,4 | g Emulgator |
| | 173,52 | g Methylmethacrylat |
| | 6,48 | g Allylmethacrylat |
| Emulsion II | 330 | g Wasser |
| | 1,22 | g Emulgator |
| | 1,62 | g Initiator |
| | 399,0 | g Butylacrylat |
| | 118,8 | g Methylmethacrylat |
| | 25,38 | g Methacrylsäure |

Feststoffgehalt der erhaltenen Dispersion: 39 Gew.-%
pH-Wert: 9
Viskosität: 86 mPa s
Teilchengröße: 84 nm

Beispiel 9.

Vorlage wie in Beispiel 1

| Emulsion I | 94 | g Wasser |
|---|---|---|
| | 0,32 | g Initiator |
| | 0,33 | g Emulgator |
| | 136,8 | g Methylmethacrylat |
| | 7,2 | g Allylmethacrylat |
| Zulaufdauer: 48 Minuten | | |

(fortgesetzt)

| Emulsion II | 353 | g Wasser |
| --- | --- | --- |
| | 1,3 | g Initiator |
| | 1,3 | g Emulgator |
| | 506,88 | g Ethylacrylat |
| | 57,6 | g Butylacrylat |
| | 11,52 | g Methacrylsäure |
| Zulaufdauer: 192 Minuten | | |

Die Dispersion wurde zusatzlich stabilisiert mit 21,6 g eines oxalkylierten tert-Octylphenoly (Triton X 305) und mit wäßrigem Ammoniak auf pH 9 eingestellt. Das Kern/Schale-Verhältnis beträgt 20 : 80 Gew.-Teile.

Feststoffgehalt der erhaltenen Dispersion: 40,1 %
Viskosität: 61 mPa s
Teilchengroße: 66 nm

**Patentansprüche**

1. Wäßriges Überzugsmittel, enthaltend als Bindemittel dispergierte Latexteilchen mit einem mittleren Teilchendurchmesser unter 140 nm, aufgebaut aus

   a) einem Kernmaterial mit einer dynamischen Glastemperatur über 60°C und
   b) einem Schalenmaterial, das 0,5 bis 10 Gew.-% Einheiten einer ungesättigten polymerisierbaren Carbonsäure enthält, mit einer dynamischen Glastemperatur unter 80°C, wobei die dynamische Glastemperatur der Schale mindestens 20 K unterhalb der des Kerns liegt,
   dadurch gekennzeichnet,
   daß Kern- und Schalenmaterial zusammengenommen weniger als 20,2 Gew.-% Monomereinheiten aus Monovinylarylverbindungen enthalten und daß die wäßrige Dispersion der Latexteilchen eine Mindestfilmbildungstemperatur MFT unter 50°C hat und das Kernmaterial 5 - 45 Gew.-% und das Schalenmaterial 95 - 55 Gew.-% der Latexteilchen ausmachen.

2. Wäßriges Überzugsmittel nach Anspruch 1, dadurch gekennzeichnet, daß die Latexteilchen einen mittleren Teilchendurchmesser unter 120 nm, vorzugsweise unter 100 nm haben.

3. Wäßriges Überzugsmittel nach Anspruch 1 oder 2, dadurch gekennzeichnet, daß sie einen Film mit einem E-Modul von mindestens 5 MPa ergeben.

**Claims**

1. An aqueous coating agent, containing as a bonding agent dispersed latex particles with a mean particle diameter of less than 140 nm, comprising

   a) a core material with a dynamic glass temperature of greater than 60° C and

   b) a shell material which contains 0.5 to 10 wt.-% units of an unsaturated polymerisable carbonic acid with a dynamic glass temperature of less than 80° C, wherein the dynamic glass temperature of the shell is at least 20° K below that of the core,
   characterised in that the core and shell material, taken together, contain less than 20.2 wt.-% monomer units of monovinylaryl compounds and that the aqueous dispersion of latex particles has a lowest film-forming temperature MFT of less than 50° C and that the core material comprises 5 - 45 wt.-% and the shell material 95 - 55 wt.-% of the latex particles.

2. An aqueous coating agent according to claim 1, characterised in that the latex particles have a mean particle diameter of less than 120 nm, preferably of less than 100 nm.

**3.** An aqueous coating agent according to claim 1 or 2, characterised in that they produce a film with an E module of at least 5 MPa.

**Revendications**

**1.** Revêtement aqueux contenant comme liant des particules de latex dispersées ayant un diamètre particulaire moyen inférieur à 140 nm, constitué de

a) un matériau de noyau ayant une température de transition vitreuse dynamique supérieure à 60°C et

b) un matériau d'enveloppe qui contient de 0,5 A 10 % en poids d'unités d'un acide carboxylique polymérisable insaturé, avec une température de transition vitreuse dynamique inférieure à 80°C, la température de transition vitreuse dynamique de l'enveloppe se situant au moins à 20 K en-dessous de celle du noyau, caractérisé en ce que

- le matériau du noyau et le matériau de l'enveloppe pris ensemble contiennent moins de 20,2 % en poids d'unités monomères de composés monovinylaryliques, et
- la dispersion aqueuse des particules de latex présente une température minimale de formation de pellicule TMF inférieure A 50°C, le matériau du noyau constitue de 5 à 45 % en poids et le matériau d'enveloppe de 95 à 55 % en poids des particules de latex.

**2.** Revêtement aqueux selon la revendication 1,
caractérisé en ce que
les particules de latex ont un diamètre particulaire moyen inférieur à 120 nm, de préférence inférieur à 100 nm.

**3.** Revêtement aqueux selon la revendication 1 ou 2,
caractérisé en ce qu'
il produit une pellicule ayant un module E d'au moins 5 MPa.